# EUROPÄISCHE PATENTANMELDUNG

(11) **EP 1 058 412 A1**
(43) Veröffentlichungstag der Anmeldung: **06.12.2000**
(21) Anmeldenummer: 99304398.3
(22) Anmeldetag: 31.05.1999
(51) Int. Cl.: H04B 7/26

(54) **Verfahren zur asymmetrischen Datenübertragung in einem Funk-Kommunikationssystem**

(71) Anmelder: SIEMENS AKTIENGESELLSCHAFT, 80333 München (DE)
(72) Erfinder: Dillinger, Markus, 81737 München (DE); Faerber, Michael, 82515 Wolfratshausen (DE); Wagner, Georg, 85570 Ottenhofen (DE); Krause, Joern, Dr., 12107 Berlin (DE); Menzel, Christian, Dr., 82216 Maisach (DE); Raaf, Bernhard, 81475 München (DE)

(57) **Zusammenfassung**

Erfindungsgemäß wird von einer Basisstation ein allgemeiner Signalisierungskanal auf zumindest einer Trägerfrequenz innerhalb eines Frequenzbands für die Abwärtsrichtung zu einer Teilnehmerstation gesendet. Die Teilnehmerstation ermittelt anhand der Trägerfrequenz des allgemeinen Signalisierungskanals eine Trägerfrequenz für einen Zugriffssignalisierungskanal innerhalb eines korrespondierenden Frequenzbands für die Aufwärtsrichtung. Hierbei weisen die Trägerfrequenzen der Signalisierungskanäle einen vorgegebenen Duplexabstand auf.

## Beschreibung

Die Erfindung betrifft ein Verfahren zur asymmetrischen Datenübertragung in einem Funk-Kommunikationssystem, insbesondere in einem Mobilfunk- oder drahtlosen Teilnehmeranschlußsystem.

Zellulare Funk-Kommunikationssysteme der ersten und zweiten Generation nutzen symmetrisch gepaarte und um einen sogenannten Duplexabstand getrennte Trägerfrequenzen zur Datenübertragung innerhalb einer Verbindung. Dies wird allgemein als FDD-Übertragungsverfahren (Frequency Division Duplex - Frequenzduplex-Betrieb) bezeichnet.

Das bekannte digitale GSM-Mobilfunksystem (Global System for Mobile Communications) der zweiten Generation ist ein solches Mobilfunksystem mit einem FDD-Übertragungsverfahren. Dieses Mobilfunksystem wurde hinsichtlich einer Sprachübertragung optimiert. Bei einer Sprachübertragung sind die zu übertragenen Datenmengen in beiden Übertragungsrichtungen statistisch betrachtet gleich, so daß über eine Funkschnittstelle zwischen einer Basisstation und einer Teilnehmerstation für die Aufwärtsrichtung von der Teilnehmerstation zu der Basisstation und für die Abwärtsrichtung von der Basisstation zu der Teilnehmerstation gleiche Übertragungskapazitäten vorzusehen sind. Die symmetrische Zuweisung von Trägerfrequenzen für eine Verbindung bietet den Vorteil, daß einfache aber sehr effektive analoge Filter die Frequenzen trennen können.

Zukünftige Mobilfunksysteme werden im steigenden Maße asymmetrische Dienste anbieten wie z.B. Email, Telefax, Internet, Videoübertragung, Multimediaanwendungen etc.. Gemittelt über alle Teilnehmer sind in der Abwärtsrichtung typischerweise erheblich höhere Übertragungskapazitäten erforderlich als in der Aufwärtsrichtung. Im Frequenzduplex-Betrieb in einem symmetrisch gepaarten Frequenzband erreicht das System daher nur eine schlechte spektrale Effizienz, da die verfügbare Übertragungskapazität in Aufwärtsrichtung zum Teil ungenutzt bleibt.

Für die dritte Generation digitaler zellularer Mobilfunksysteme besteht ein weltweiter Trend zur Verwendung eines WCDMA (Wideband Code Division Multiple Access) basierten Zugriffsverfahrens im Frequenzduplex-Betrieb mit symmetrisch gepaarten Trägerfrequenzzuweisungen. Das Problem der asymmetrischen Dienste bleibt damit unberücksichtigt. Hingegen soll ein eigener Übertragungsmodus mit TDD-Übertragungsverfahren (Time Division Duplex) solche Dienste unterstützen. Im TDD-Übertragungsverfahren, wie es unter anderem aus der DE 198 22 276 bekannt ist, nutzen die Auf- und Abwärtsrichtung ein gemeinsames Frequenzband, wobei Zeitschlitze wahlweise einer der Übertragungsrichtung zugeordnet werden können, so daß nahezu beliebige Asymmetrieverhältnisse einstellbar sind.

In dem Spezifikationsdokument 3GPP TSG RAN WG4, S4.01A, v1.1.0, Radio Transmission and Reception, UTRA (UE) FDD, 12.04.1999, ist in der Sektion 5.2 auf der S. 12 offenbart, welche Frequenzbänder für das FDD-Übertragungsverfahren zur Verfügung gestellt werden sollen. Hierbei sind für die Aufwärtsrichtung Frequenzbänder mit jeweils 5 MHz zwischen 1920 und 1980 MHz, und für die Abwärtsrichtung zwischen 2110 und 2170 MHz vorgesehen. Für das TDD-Übertragungsverfahren sind Frequenzbänder mit jeweils 5 MHz zwischen 1900 und 1920 MHz sowie zwischen 2010 und 2025 MHz vorgesehen.

In der Sektion 5.3 des Spezifikationsdokuments ist weiterhin angegeben, daß der Duplexabstand zwischen Aufwärts- und Abwärtsrichtung für das FDD-Übertragungsverfahren sowohl fest als auch variabel sein kann. Hierdurch ist auch in dem FDD-Übertragungsverfahren eine Zuweisung von asymmetrischen Übertragungskapazitäten möglich. Wenn ein Betreiber über mehrere Frequenzbänder verfügt, kann einer oder mehreren Verbindungen in der Abwärtsrichtung beispielsweise eine größere Anzahl von Frequenzbändern als in der Aufwärtsrichtung zugewiesen werden.

Der Erfindung liegt die Aufgabe zugrunde, ein Verfahren anzugeben, das eine einfache Implementierung des variablen Duplexabstands und eine flexible Nutzung der zur Verfügung stehenden Übertragungskapazitäten in einem FDD-Übertragungsverfahren ermöglicht. Diese Aufgabe wird durch das Verfahren mit den Merkmalen des Anspruchs 1 und durch das Basisstationssystem mit den Merkmalen des Anspruchs 10 gelöst. Vorteilhafte Weiterbildungen der Erfindung sind den Unteransprüchen zu entnehmen.

Erfindungsgemäß wird kennzeichnend von einer Basisstation ein allgemeiner Signalisierungskanal auf zumindest einer Trägerfrequenz innerhalb eines Frequenzbands für die Abwärtsrichtung zu einer Teilnehmerstation gesendet. Die Teilnehmerstation ermittelt anhand der Trägerfrequenz des allgemeinen Signalisierungskanals eine Trägerfrequenz für einen Zugriffssignalisierungskanal innerhalb eines korrespondierenden Frequenzbands für die Aufwärtsrichtung. Hierbei weisen die Trägerfrequenzen der Signalisierungskanäle einen vorgegebenen Duplexabstand auf.

Durch die erfindungsgemäße Ausgestaltung des Verfahrens wird vorteilhaft eine Kompatibilität zu Teilnehmerstationen erreicht, die das Merkmal des variablen Duplexabstands nicht unterstützen. Zumindest zwei korrespondierende Trägerfrequenzen für die Auf- und Abwärtsrichtung weisen einen vorgegebenen Duplexabstand auf, der jeder Teilnehmerstation bekannt ist und nicht variiert wird. Dieser Duplexabstand kann für das einleitend beschriebene Mobilfunksystem der dritten Generation beispielsweise 190 MHz betragen. Die korrespondierenden Trägerfrequenzen werden für die Übertragung des allgemeinen Signalisierungskanals bzw. des Zugriffssignalisierungskanals verwendet. Durch den in der Teilnehmerstation bekannten Duplexabstand kann die Teilnehmerstation weiterhin vorteilhaft ohne zusätzliche Signalisierung die Trägerfrequenz für den Zugriffssignalisierungskanal ermitteln, wodurch die Signalisierungslast in dem allgemeinen Signalisierungskanal reduziert wird. Weiterhin können durch die Tatsache, daß ein Betreiber mit einem aus mehreren Trägerfrequenzen bestehenden Frequenzband diese Signalisierungskanäle beispielsweise nur auf jeweils einem symmetrischen Trägerfrequenzpaar zur Verfügung stellt, so daß die weiteren Trägerfrequenzen vollständig für die Datenübertragung mit einem gegebenenfalls auftretenden variablen Duplexabstand verwendet werden können. Eine derartige Reduzierung der Anzahl Signalisierungskanäle führt darüberhinaus zu einer vorteilhaften Verringerung von Interferenzen zwischen benachbarten Trägerfrequenzen.

Gemäß einer ersten Weiterbildung der Erfindung erfolgt die Zuweisung einer benötigten Übertragungskapazität zu der Teilnehmerstation in der Weise, daß eine Anzahl von jeweils zugewiesenen Trägerfrequenzen für die Aufwärts- und/oder Abwärtsrichtung innerhalb des jeweiligen Frequenzbands minimiert wird. Hierdurch können, wie in einer weiteren Weiterbildung offenbart ist, die nicht verwendeten Trägerfrequenzen für eine Datenübertragung entsprechend einem einleitend beschriebenen Zeitduplex-Schema verwendet werden. Somit können Verbindungen des TDD-Übertragungsverfahrens temporär auch Übertragungskapazität in dem für das FDD-Übertragungsverfahren vorgesehenen Frequenzspektrum nutzen, wobei sowohl Trägerfrequenzen in dem Frequenzspektrum für die Aufwärtsrichtung als auch für die Abwärtsrichtung unabhängig voneinander verwendet werden können. Vorteilhaft kann hierdurch die Nutzung der vorhandenen Übertragungskapazität für das FDD-Übertragungsverfahren deutlich effizienter erfolgen und gleichzeitig die verfügbare Übertragungskapazität für das TDD-Übertragungsverfahren vergrößert werden.

Besonders effizient läßt sich die aufgrund von asymmetrischen Diensten freie Übertragungskapazität gemäß einer weiteren Weiterbildung der Erfindung für eine Übertragung von Informationen eines Paketdatendienstes nutzen. Da große Asymmetrieverhältnisse vorwiegend bei Paketdatendiensten des FDD-Übertragungsverfahrens auftreten, beispielsweise bei einem Herunterladen einer Internetseite oder einer Multimediaanwendung, ist diese Asymmetrie meist nur temporär begrenzt vorhanden. Die dabei temporär zur Verfügung stehende freie Übertragungskapazität kann daher sehr gut für Paketdatendienste des TDD-Übertragungsverfahrens mit einer zeitlich vergleichbaren Belegungszeit der Übertragungskapazität genutzt werden, ohne daß es zu einer negativen Beeinträchtigung der Flexibilität bei der Kapazitätszuweisung in dem FDD-Übertragungsverfahren kommt.

Gemäß einer weiteren Weiterbildung der Erfindung wird von der Teilnehmerstation mittels einer Signalisierungsnachricht in dem Zugriffssignalisierungskanal eine Unterstützung der Datenübertragung mit variablen Duplexabstand zu der Basisstation signalisiert. Die Signalisierungsnachricht wird dabei gemäß einer auf dieser Weiterbildung basierenden Ausgestaltung bei einem Verbindungsaufbau zu der Basisstation gesendet.

Durch diese Signalisierung der Unterstützung des variablen Duplexabstands kann netzseitig eine flexible Zuweisung von Übertragungskapazität zu der aufzubauenden Verbindung erfolgen, wobei auch asymmetrische Übertragungsraten unterstützt werden. Teilnehmerstationen, die diese Unterstützung nicht zu der Basisstation signalisieren, werden Übertragungskapazitäten auf korrespondierenden Trägerfrequenzen mit dem vorgegebenen festen Duplexabstand zugewiesen. Eine asymmetrische Übertragungskapazität ist für diese Teilnehmerstationen nur innerhalb der symmetrischen Trägerfrequenzen beispielsweise durch eine Zuweisung einer unterschiedlichen Anzahl von jeweiligen physikalischen Übertragungskanälen möglich.

Die Signalisierungsnachricht kann von der Teilnehmerstation beispielsweise bei einer Signalisierung eines Verbindungsaufbauwunsches oder nach der Signalisierung eines Verbindungsaufbaus von der Basisstation in dem Zugriffssignalisierungskanal zu der Basisstation gesendet werden. Hierdurch wird wiederum vorteilhaft Übertragungskapazität eingespart, da netzseitig die Zuweisung von Übertragungskapazität ohne zusätzlichen Signalisierungsaustausch zwischen der Basisstation und der Teilnehmerstation erfolgen kann.

Gemäß einer weiteren Weiterbildung der Erfindung wird in dem Funk-Kommunikationssystem für jede Ebene einer hierarchischen Funkzellstruktur jeweils zumindest ein allgemeiner Signalisierungskanal und ein Zugriffssignalisierungskanal mit dem vorgegebenen Duplexabstand vorgesehen. Hierdurch werden den Teilnehmerstationen, die den variablen Duplexabstand nicht unterstützen, in jeder hierarchischen Ebene die Signalisierungskanäle zur Verfügung gestellt.

Gemäß weiterer Weiterbildungen sind das Frequenduplex-Schema gemäß einem breitbandigen kontinuierlichen CDMA-Übertragungsverfahren und das Zeitduplex-Schema gemäß einem breitbandigen diskontinuierlichen TD/CDMA-Übertragungsverfahren verwirklicht. Diese Übertragungsverfahren ermöglichen eine effiziente und flexible Nutzung der vorhandenen Übertragungskapazität.

Ausführungsbeispiele der Erfindung werden anhand der beiliegenden Zeichnungen näher erläutert.

Dabei zeigen
- FIG 1: ein Blockschaltbild eines Funk-Kommunikationssystems, insbesondere eines Mobilfunksystems, und
- FIG 2: eine schematische Darstellung der Zuweisung von Übertragungskapazitäten in korrespondierenden Frequenzbändern eines FDD-Übertragungsverfahrens.

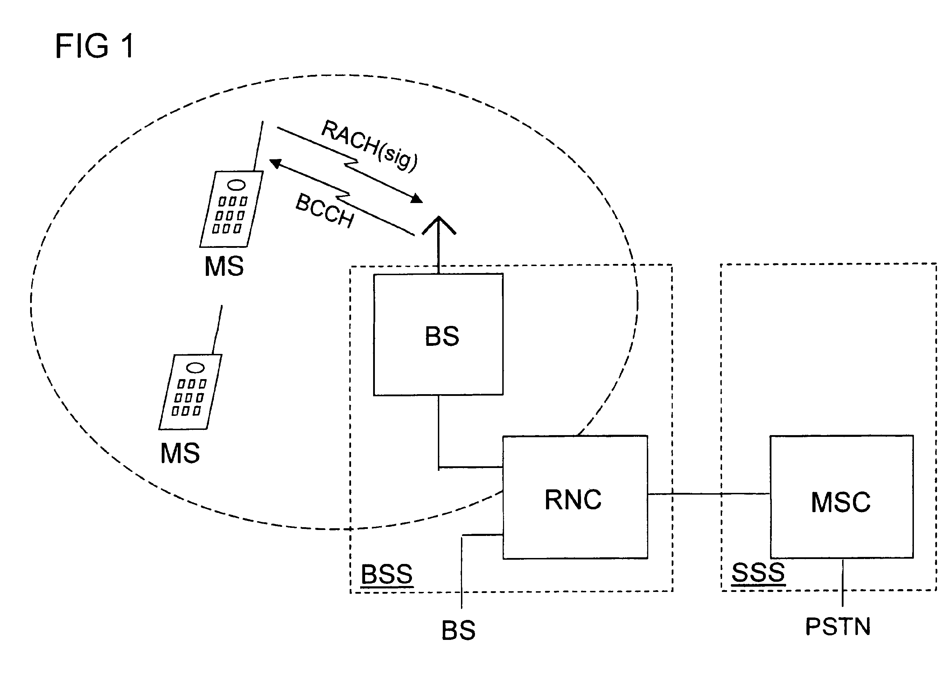

Das in der FIG 1 dargestellte Mobilfunksystem als Beispiel eines Funk-Kommunikationssystems besteht aus einer Vielzahl von Mobilvermittlungsstellen MSC, die zu einem Vermittlungsnetz SSS (Switching Subsystem) gehören und untereinander vernetzt sind bzw. den Zugang zu einem Festnetz PSTN herstellen. Weiterhin sind diese Mobilvermittlungsstellen MSC mit einem oder mehreren Basisstationssystemen BSS (Base Station Subsystem) verbunden, die jeweils zumindest eine Einrichtung RNC zum Zuteilen von funktechnischen Ressourcen sowie zumindest eine damit verbundene Basisstation BS aufweisen. Eine Basisstation BS kann über eine Funkschnittstelle eine Verbindung zu Teilnehmerstationen MS, z.B. Mobilstationen oder anderweitige mobile und stationäre Endgeräte, aufbauen. Durch jede Basisstation BS wird zumindest eine Funkzelle gebildet. Die Größe der Funkzelle wird in der Regel durch die Reichweite eines allgemeinen Signalisierungskanals BCCH (Broadcast Control Channel), der von den Basisstationen BS mit einer jeweils maximalen Sendeleistung gesendet wird, bestimmt. Bei einer Sektorisierung oder bei hierarchischen Zellstrukturen werden pro Basisstation BS auch mehrere Funkzellen versorgt. In gleicher Weise können von einer Basisstation BS sowohl das FDD- als auch das TDD-Übertragungsverfahren unterstützt werden, wobei in den unteren Hierarchieebenen beispielsweise das TDD-Übertragungsverfahren und in der obersten Hierarchieebene das FDD-Übertragungsverfahren verwendet wird. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

Bei einem Verbindungsaufbauversuch durch die Teilnehmerstation MS wertet die Teilnehmerstation MS die Informationen des allgemeinen Signalisierungskanals BCCH aus, um beispielsweise diejenige Basisstation BS mit den günstigsten Übertragungsverhältnissen auszuwählen. In einem speziellen Zugriffssignalisierungskanal RACH (Random Access Channel) signalisiert die Teilnehmerstation MS der Basisstation BS daraufhin den Verbindungsaufbauwunsch. Diese Signalisierung kann dabei beispielsweise die Anzahl der benötigten physikalischen Übertragungskanäle oder die Art des gewünschten Dienstes angeben. Zusätzlich zu diesen Angaben signalisiert die Teilnehmerstation MS mittels einer speziellen Signalisierungsnachricht sig, das sie einen variablen Duplexabstand zwischen den Trägerfrequenzen für die Aufwärts- und Abwärtsrichtung unterstützt. In gleicher Weise kann die Signalisierung der speziellen Signalisierungsnachricht sig bei einem netzseitig initiierten Verbindungsaufbau erfolgen, wobei die Teilnehmerstation MS mittels einer Signalisierung in dem Zugriffssignalisierungskanal RACH den Verbindungsaufbau bestätigt und parallel dazu die Signalisierungsnachricht sig zu der Basisstation BS sendet. Nach einer Auswertung der Signalisierungsnachricht sig kann von der Einrichtung RNC eine Zuweisung von Übertragungskapazität zu der aufzubauenden Verbindung durchgeführt werden.

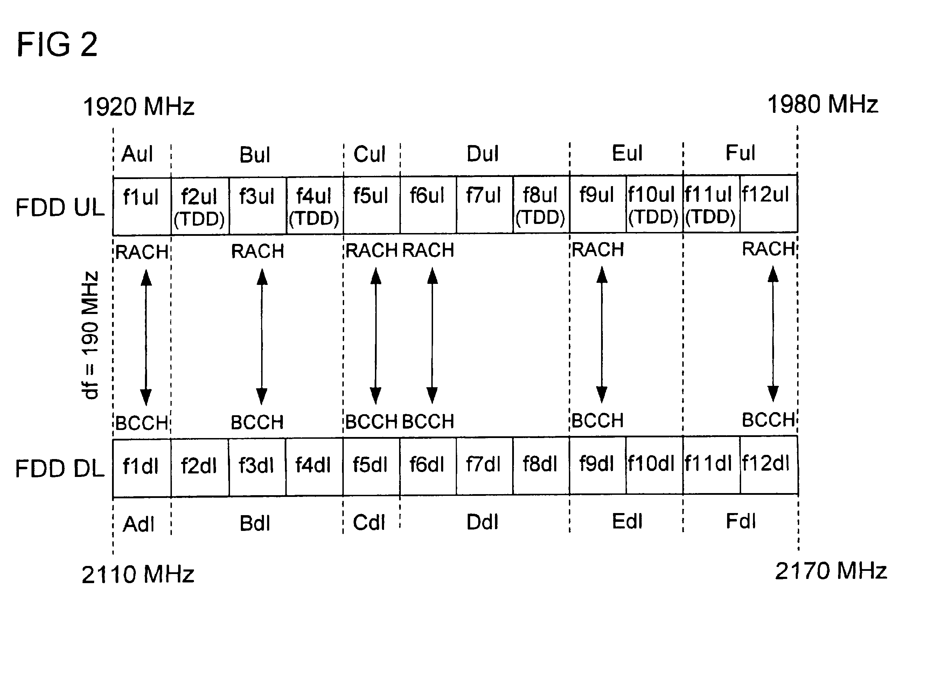

In der FIG 2 sind beispielhaft die für die dritte Generation Mobilfunk vorgesehenen Frequenzspektren für das einleitend beschriebene FDD-Übertragungsverfahren aufgezeigt. Für die Übertragung in Aufwärtsrichtung UL steht dabei das Spektrum zwischen 1920 und 1980 MHz, und für die Übertragung in Abwärtsrichtung DL das dazu korrespondierende Spektrum zwischen 2110 und 2170 MHz zur Verfügung. Die symmetrischen Frequenzspektren sind jeweils in 12 Trägerfrequenzen f1ul, f2ul,... bzw. f1dl, f2dl,... mit einem Frequenzabstand von 5 MHz aufgeteilt. Beispielhaft sind die Frequenzspektren vier Betreibern zugeordnet, wie durch die vertikalen durchbrochenen Linien verdeutlicht werden soll, wobei die Anzahl der Trägerfrequenzen pro Betreiber variieren kann. Die einzelnen Trägerfrequenzen f1ul, f1dl, f2ul, f2dl,... sind symmetrisch gepaart und durch einen festen Duplexabstand df von 190 MHz getrennt.

Gemäß der FIG 2 sind einem ersten Betreiber die symmetrischen Frequenzbänder Aul, Adl mit jeweils einer Trägerfrequenz f1ul bzw. f1dl zugeordnet. Die Trägerfrequenzen f1ul, f1dl sind symmetrisch gepaart und durch den festen Duplexabstand df getrennt. Eine asymmetrische Zuweisung von Übertragungskapazität kann hierbei nur innerhalb der Frequenzbänder Aul, Adl erfolgen. Ein variabler Duplexabstand df wird nicht unterstützt und die Trägerfrequenzen f1ul, f1dl werden für den Zugriffssignalisierungskanal RACH bzw. allgemeinen Signalisierungskanal BCCH genutzt.

Einem zweiten Betreiber sind dahingegen die symmetrischen Frequenzbänder Bul, Bdl mit jeweils drei symmetrisch gepaarten Trägerfrequenzen f2ul, f3ul, f4ul bzw. f2dl, f3dl, f4dl zugeordnet. Ein symmetrisches Trägerfrequenzpaar f3ul, f3dl wird für die Übertragung der Signalisierungskanäle RACH, BCCH verwendet, wobei die Entscheidung, auf welchen Trägerfrequenzen die Signalisierungskanäle RACH, BCCH gesendet werden, beispielsweise hinsichtlich einer möglichst minimalen Interferenz mit einer Nachbarträgerfrequenz getroffen wird. Die Positionierung des allgemeinen Signalisierungskanals BCCH dient weiterhin dazu, den Teilnehmerstationen MS anzuzeigen, auf welcher Trägerfrequenz f2ul sie den Zugriffssignalisierungskanal RACH für einen Verbindungsaufbau zu der jeweiligen Basisstation BS senden müssen, da der Duplexabstand df zu dem allgemeinen Signalisierungskanal BCCH per se in der Teilnehmerstation MS bekannt ist.

Unabhängig von der Anzahl der einem Betreiber jeweils zur Verfügung stehenden Trägerfrequenzen für die Auf- UL und Abwärtsrichtung DL steht Teilnehmerstationen MS, die einen variablen Duplexabstand df nicht unterstützen, somit immer zumindest eine Trägerfrequenz f3ul für die Aufwärtsrichtung UL und eine Trägerfrequenz f3dl für die Abwärtsrichtung DL mit dem vorgegebenen festen Duplexabstand df zur Verfügung. Hierdurch ist das Merkmal des variablen Duplex-Abstands vorteilhaft rückwärts kompatibel.

Die weiteren Trägerfrequenzen f2ul, f2dl, f4ul, f4dl stehen für eine freie und flexible Zuweisung zur Verfügung. So können beispielsweise bei einem Dienst mit einem höheren Übertragungskapazitätsbedarf für die Abwärtsrichtung DL im Vergleich zu dem Bedarf für die Aufwärtsrichtung UL mehrere Trägerfrequenzen f2dl, f3dl, f4dl in der Abwärtsrichtung DL im Sinne eine Mehrträger-Verbindung zusammengefügt werden, wobei für die Aufwärtsrichtung UL vorteilhaft nur die Trägerfrequenz f2ul für die Signalisierungskanäle RACH, BCCH verwendet wird. Die weiteren, für die Aufwärtsrichtung UL nicht genutzten Trägerfrequenzen f2ul, f4ul können dann für das TDD-Übertragungsverfahren verwendet werden. Eine derartige Mehrträger-Verbindung bedingt die Unterstützung des variablen Duplexabstands df durch die Teilnehmerstation MS, da der Duplexabstand df zwischen beispielsweise den Trägerfrequenzen f3ul und f2dl bzw. f4dl nicht dem vorgegebenen Duplexabstand df von 190 MHz entspricht.

Für den Fall mehrerer Dienste bzw. Verbindungen kann die Zuweisung von Übertragungskapazität in der gleichen Weise erfolgen. So werden beispielsweise zwei Verbindungen, die eine jeweils große Übertragungskapazität in der Abwärtsrichtung DL und nur eine kleine Übertragungskapazität in der Aufwärtsrichtung UL benötigen, jeweils Übertragungskanäle auf einer bzw. zwei Trägerfrequenzen f2dl bzw. f3dl, f4dl für die Abwärtsrichtung DL zugewiesen, währenddessen für die Aufwärtsrichtung UL Übertragungskanäle nur auf einer Trägerfrequenz f3ul zugewiesen werden. Hierbei kann die Zuweisung insbesondere der Übertragungskapazität für die Aufwärtsrichtung UL von der Einrichtung RNC zur Zuweisung funktechnischer Ressourcen derart erfolgen, daß bei einem Auftreten von asymmetrischen Diensten die jeweils benötigte Anzahl von Trägerfrequenzen für die Übertragungsrichtung mit der geringeren Übertragungslast minimiert wird. Wiederum können die freien Trägerfrequenzen f2ul, f4ul für Verbindungen des TDD-Übertragungssystems, wie in der FIG 2 dargestellt, genutzt werden. In gleicher Weise kann das Verfahren für eine Nutzung der Trägerfrequenzen für die Abwärtsrichtung DL durch Verbindungen des TDD-Übertragungsverfahrens durchgeführt werden, wenn die Asymmetrieverhältnisse in umgekehrter Richtung auftreten.

Einem dritten Betreiber sind in der FIG 2 beispielhaft vier symmetrische Trägerfrequenzpaare f5ul, f5dl, f6ul, f6dl,... zugeordnet. Diese Trägerfrequenzpaare nutzt der Betreiber beispielsweise für einen Aufbau einer hierarchischen Funkzellstruktur, wobei die Frequenzbänder Cul, Cdl mit einem ersten Trägerfrequenzpaar f5ul, f5dl für eine obere Zellebene entsprechend einer Makrozelle und die Frequenzbänder Dul, Ddl mit weiteren Trägerfrequenzpaaren f6ul, f6dl, f7ul, f7dl, f8ul, f8dl für eine untere Zellebene entsprechend einer Mikrozelle verwendet werden. Diese Konstellation ist insbesondere in Ballungsgebieten mit einem hohen Verkehrsaufkommen und größtenteils geringen Geschwindigkeiten der Teilnehmer sinnvoll. Wie in dem Beispiel verdeutlicht wird, weist jede Zellebene ein Trägerfrequenzpaar f5ul, f5dl bzw. f6ul, f6dl für die Übertragung der Signalisierungskanäle RACH, BCCH auf. Die obere Zellebene mit dem Trägerfrequenzpaar f5ul, f5dl besitzt, wie in dem Beispiel des ersten Betreibers bereits erläutert wurde, nur eine begrenzte Flexibilität bei der Zuweisung von Übertragungskapazität. Aufgrund der größeren Anzahl verfügbarer Trägerfrequenzen ist dahingegen in der unteren Zellebene eine flexible Zuweisung mit einem variablen Duplexabstand df im Sinne des vorangehenden Beispiels des zweiten Betreibers möglich. Die Zuweisung von Übertragungskapazität zu Verbindungen wird dementsprechend in der Weise erfolgen, daß Teilnehmern mit einer hohen Mobilität und einer geringen asymmetrischen Datenübertragung von der Makrozelle versorgt werden, währenddessen stationäre Teilnehmer oder Teilnehmer mit einer geringen Geschwindigkeit jedoch mit einer großen Asymmetrie bei der Datenübertragung von der Mikrozelle versorgt werden. Nicht verwendete Trägerfrequenzen, wie beispielsweise die angegebene Trägerfrequenz f8ul für die Aufwärtsrichtung UL, können wiederum für Verbindungen eines TDD-Übertragungsverfahrens genutzt werden.

Die Beispiele zweier weiterer Betreiber, die jeweils symmetrische Frequenzbänder Eul, Edl bzw. Ful, Fdl mit zwei Trägerfrequenzpaaren f9ul, f9dl, f10ul, f10dl bzw. f11ul, f11dl, f12ul, f12dl aufweisen, zeigen die Möglichkeit auf, jeweils zwei Trägerfrequenzen für eine asymmetrische Datenübertragung mit einem variablen Duplexabstand df verwenden zu können. Wiederum können dabei nicht zugewiesene Trägerfrequenzen f10ul, f11ul vorteilhaft für Verbindungen eines TDD-Übertragungsverfahrens genutzt werden.

## Patentansprüche

1. Verfahren zur asymmetrischen Datenübertragung in einem Funk-Kommunikationssystem mit zumindest einer Basisstation (BS) und zumindest einer Teilnehmerstation (MS), die über eine Funkschnittstelle miteinander verbunden sind, bei dem Daten zwischen der Basisstation (BS) und der Teilnehmerstation (MS) gemäß einem Frequenzduplex-Schema (FDD) in einer jeweiligen Übertragungsrichtung (DL, UL) übertragen werden, wobei ein Frequenzband (Adl, Bdl,...) mit zumindest einer ersten Trägerfrequenz (f1dl, f2dl,...) für eine Abwärtsrichtung (DL) und ein Frequenzband (Aul, Bul,.,.) mit zumindest einer zweiten Trägerfrequenz (f1ul, f2ul,...) für eine Aufwärtsrichtung (UL) genützt wird, und die jeweiligen Trägerfrequenzen (f1dl, f1ul, f2dl, f2ul,...) gemäß einem variablen Duplexabstand zuordenbar sind,
**dadurch gekennzeichnet, daß**
von der Basisstation (BS) ein allgemeiner Signalisierungskanal (BCCH) auf zumindest einer Trägerfrequenz (f1dl, f2dl,...) innerhalb des Frequenzbands (Adl, Bdl,...) für die Abwärtsrichtung (DL) gesendet wird, und von der Teilnehmerstation (MS) anhand der Trägerfrequenz (f1dl, f2dl,...) des allgemeinen Signalisierungskanals (BCCH) eine korrespondierende Trägerfrequenz (f1ul, f2ul,...) für einen Zugriffssignalisierungskanal (RACH) innerhalb des korrespondierenden Frequenzbands (Aul, Bul,...) für die Aufwärtsrichtung (UL) ermittelt wird, wobei die Trägerfrequenzen (f1dl, f1ul, f2dl, f2ul,...) der Signalisierungskanäle (BCCH, RACH) einen vorgegebenen Duplexabstand (df) aufweisen.

2. Verfahren nach Anspruch 1,
**dadurch gekennzeichnet, daß**
eine Zuweisung einer benötigten Übertragungskapazität zu der Teilnehmerstation (MS) in der Weise erfolgt, daß eine Anzahl von jeweils in der Aufwärtsrichtung (UL) und/oder in der Abwärtsrichtung (DL) zugewiesener Trägerfrequenzen (f1dl, f1ul, f2dl, f2ul,...) innerhalb des jeweiligen Frequenzbands (Adl, Aul, Bdl, Bul,...) minimiert wird.

3. Verfahren nach einem vorhergehenden Anspruch,
**dadurch gekennzeichnet, daß**
die nicht zugewiesenen Trägerfrequenzen (f1dl, f1ul, f2dl, f2ul,...) innerhalb des jeweiligen Frequenzbands (Adl, Aul, Bdl, Bul,...) für eine Übertragung von Daten gemäß einem Zeitduplex-Schema (TDD) verwendbar sind.

4. Verfahren nach dem vorhergehenden Anspruch,
**dadurch gekennzeichnet, daß**
die gemäß dem Zeitduplex-Schema (TDD) übertragenen Daten Informationen eines Paketdatendienstes sind.

5. Verfahren nach einem vorhergehenden Anspruch,
**dadurch gekennzeichnet, daß**
von der Teilnehmerstation (MS) mittels einer Signalisierungsnachricht (sig) in dem Zugriffssignalisierungskanal (RACH) eine Unterstützung der Datenübertragung mit dem variablen Duplexabstand (df) zu der Basisstation (BS) signalisiert wird.

6. Verfahren nach dem vorhergehenden Anspruch,
**dadurch gekennzeichnet, daß**
von der Teilnehmerstation (MS) die Signalisierungsnachricht (sig) bei einem Verbindungsaufbau zu der Basisstation (BS) in dem Zugriffssignalisierungskanal (RACH) gesendet wird.

7. Verfahren nach einem vorhergehenden Anspruch,
**dadurch gekennzeichnet, daß**
in dem Funk-Kommunikationssystem für jede Ebene einer hierarchischen Funkzellstruktur jeweils zumindest ein allgemeiner Signalisierungskanal (BCCH) und ein Zugriffssignalisierungskanal (RACH) mit dem vorgegebenen Duplexabstand (df) vorgesehen werden.

8. Verfahren nach einem vorhergehenden Anspruch,
**dadurch gekennzeichnet, daß**
das Frequenzduplex-Schema (FDD) gemäß einem breitbandigen kontinuierlichen CDMA-Übertragungsverfahren verwirklicht wird.

9. Verfahren nach einem vorhergehenden Anspruch,
**dadurch gekennzeichnet, daß**
das Zeitduplex-Schema (TDD) gemäß einem breitbandigen TD/CDMA-Übertragungsverfahren verwirklicht wird.

10. Basisstationssystem (BSS) eines Mobilfunk- oder drahtlosen Teilnehmeranschlußsystems zur Durchführung des Verfahrens nach einem der Ansprüche 1 bis 9.
